(19) Europäisches Patentamt / European Patent Office / Office européen des brevets

(11) **EP 3 475 222 B1**

(12) **FASCICULE DE BREVET EUROPEEN**

(45) Date de publication et mention
de la délivrance du brevet:
**13.05.2020 Bulletin 2020/20**

(21) Numéro de dépôt: **17736898.2**

(22) Date de dépôt: **27.06.2017**

(51) Int Cl.:
*C01B 25/32* *(2006.01)*      *C01B 25/22* *(2006.01)*
*C05B 7/00* *(2006.01)*      *C05B 11/12* *(2006.01)*
*A23L 33/16* *(2016.01)*

(86) Numéro de dépôt international:
**PCT/EP2017/065857**

(87) Numéro de publication internationale:
**WO 2018/002051 (04.01.2018 Gazette 2018/01)**

(54) **PROCEDE DE PREPARATION DE MONOHYDROGENOPHOSPHATE DE CALCIUM**

VERFAHREN ZUR HERSTELLUNG VON CALCIUMMONOHYDROGENPHOSPHAT

METHOD FOR PRODUCING CALCIUM MONOHYDROGEN PHOSPHATE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats de validation désignés:
**MA**

(30) Priorité: **28.06.2016 BE 201605485**

(43) Date de publication de la demande:
**01.05.2019 Bulletin 2019/18**

(73) Titulaire: **Prayon Technologies
4480 Engis (BE)**

(72) Inventeurs:
• **THEYS, Tibaut**
**5340 Faulx-Les-Tombes (BE)**
• **HENRY, Thomas**
**3870 Heers (BE)**

(74) Mandataire: **Gevers Patents
Intellectual Property House
Holidaystraat 5
1831 Diegem (BE)**

(56) Documents cités:
**WO-A1-2015/082468      FR-A1- 2 273 760**

**Description**

La présente invention se rapporte à un procédé de préparation de monohydrogénophosphate de calcium ou phosphate dicalcique comprenant les étapes de :

a) digestion en milieu aqueux, durant une période de temps prédéterminée, d'une source de phosphate par un acide avec formation d'une pulpe comprenant une phase aqueuse contenant du phosphate de calcium en solution et une phase solide contenant des impuretés,

b) une première séparation entre ladite phase aqueuse contenant du phosphate de calcium en solution et ladite phase solide contenant des impuretés, durant une période de temps prédéterminée,

c) une neutralisation de ladite phase aqueuse contenant du phosphate de calcium en solution à un pH suffisant pour obtenir une précipitation dans un milieu aqueux de phosphate de calcium insoluble en tant que monohydrogénophosphate de calcium susdit, et

d) une deuxième séparation entre ledit milieu aqueux et ledit monohydrogénophosphate de calcium.

L'attaque d'une source de phosphate, comme du minerai de phosphate, par un acide est connue depuis de nombreuses années, par exemple des brevets US 3304157 et GB 105 15 21.

Le document WO 2004002888 divulgue un procédé de fabrication de monohydrogénophosphate de calcium (DCP) et également un procédé de production d'acide phosphorique à partir du DCP obtenu selon le procédé décrit dans ce document de brevet.

Ce document prévoit une attaque d'un minerai de phosphate dans une cuve de digestion par une solution d'acide chlorhydrique, présentant une concentration de l'ordre de 5 % en poids, pour former une pulpe comprenant une phase aqueuse contenant du phosphate de calcium et des ions chlorure en solution et une phase solide contenant des impuretés.

Le passage de la pulpe susmentionnée dans un filtre-presse permet de séparer la phase aqueuse contenant du phosphate de calcium et des ions chlorure en solution de la phase solide contenant des impuretés.

Une neutralisation de la phase aqueuse séparée contenant du phosphate de calcium et des ions chlorure est réalisée au moyen d'une addition d'un composé calcique pour faire précipiter le DCP insoluble dans la phase aqueuse, suite à une montée de pH.

Une séparation additionnelle est réalisée pour récupérer un gâteau humide de DCP en fin de procédé.

Concernant la production d'un acide phosphorique à l'aide du DCP ainsi obtenu, celle-ci est réalisée par une extraction liquide-liquide et nécessite plusieurs étapes de mise en œuvre.

Il est, en effet, nécessaire de réaliser une étape de solubilisation du gâteau humide de DCP, obtenu selon le procédé décrit précédemment, par une nouvelle attaque à l'acide chlorhydrique plus concentré pouvant aller jusqu'à 20 % en poids. Cette solubilisation permet la formation d'une solution aqueuse contenant des ions phosphate, des ions calcium et des ions chlorure, à extraire par un agent d'extraction organique.

Plus précisément, cette étape d'extraction est menée dans une colonne d'extraction au moyen d'un solvant organique et permet de produire une phase aqueuse d'extraction contenant des ions chlorure et des ions calcium et une phase organique d'extraction contenant de l'acide phosphorique.

La phase organique d'extraction contenant l'acide phosphorique est ré-extraite à l'aide d'un agent de réextraction aqueux de façon à isoler une phase aqueuse de réextraction contenant des ions phosphate.

Enfin, une concentration de la phase aqueuse de réextraction permet la formation d'une solution aqueuse d'acide phosphorique.

Ce procédé de production d'acide phosphorique est complexe et nécessite plusieurs étapes onéreuses pour fournir un acide phosphorique de qualité suffisante en vue des applications prévues.

Par ailleurs, l'utilisation de solvants d'extraction organique rend un tel procédé peu attractif en terme d'impact écologique.

Le document WO 2005 066 070 se rapporte à un procédé d'attaque de minerai de phosphate par une solution aqueuse d'acide chlorhydrique présentant une concentration en HCl inférieure à 10% en poids, avec formation d'une pulpe constituée d'une phase aqueuse contenant du phosphate de calcium en solution et des ions chlorure et d'une phase solide insoluble contenant des impuretés.

Une neutralisation de la phase aqueuse précitée est réalisée à un premier pH auquel une part significative de phosphate de calcium est maintenue en phase aqueuse afin de faire précipiter des impuretés.

Ensuite, la phase solide insoluble précitée est séparée de la phase aqueuse tandis que les impuretés précipitées sont isolées.

Une neutralisation additionnelle de la phase aqueuse est effectuée à un second pH supérieur au premier pH susdit pour précipiter du DCP qui est ensuite séparé du milieu aqueux.

Ce procédé est limité par le fait qu'il faille utiliser une solution aqueuse d'acide chlorhydrique présentant une concentration inférieure à 10 % en poids.

Plus récemment, un procédé d'attaque d'une source de phosphate par une solution aqueuse d'acide chlorhydrique a fait l'objet de la demande de brevet WO 2015 082 468.

Selon cette divulgation, la digestion de la roche en présence de la solution aqueuse d'acide chlorhydrique permet de former une pulpe constituée d'une phase aqueuse contenant du phosphate de calcium et des ions chlorure en solution, et d'une phase solide insoluble contenant des impuretés.

La phase aqueuse est ensuite séparée de la phase solide par filtration pour que la phase aqueuse puisse être neutralisée à un pH suffisant afin de former un milieu aqueux comprenant des ions chlorure et afin de précipiter le phosphate de calcium sous forme dudit sel de phosphate. Une séparation ultérieure permet d'isoler le sel de phosphate.

Selon ce procédé, les étapes d'attaque et de filtration sont réalisées à une température comprise entre 50°C et 70°C et la première solution aqueuse d'acide chlorhydrique présente une concentration en HCl inférieure ou égale à 15% en poids.

Malheureusement, les procédés connus sont peu pratiques pour les industriels étant donné qu'ils ne présentent pas un rendement d'extraction en $P_2O_5$ qui soit suffisant par rapport à la quantité de $P_2O_5$ présente dans la source de phosphate de départ et que le sel de phosphate obtenu n'est pas suffisamment pur, ce qui détermine pourtant son potentiel d'utilisation dans plusieurs domaines d'application, comme l'agriculture ou l'alimentaire et les applications techniques à haute valeur ajoutée.

Il existe donc un réel besoin de fournir un procédé pour fabriquer du monohydrogénophosphate de calcium qui résolve en finalité cette problématique liée à la pureté du monohydrogénophosphate de calcium, tout en limitant les pertes en $P_2O_5$ dans les déchets générés par le procédé dans le but d'améliorer les performances générales du procédé.

L'invention a pour but de procurer un procédé de fabrication du monohydrogénophosphate de calcium qui puisse être plus simple à mettre en œuvre et fiable, tout en tenant dûment compte du compromis entre le degré de pureté souhaité du monohydrogénophosphate de calcium obtenu en fin de procédé, la limitation des pertes en $P_2O_5$ et la durée du processus.

Pour résoudre ce problème, il est prévu suivant l'invention un procédé tel qu'indiqué au début, dans lequel ladite première séparation de ladite étape b) est réalisée à une vitesse de filtration comprise entre 0,15 et 3 tonnes de $P_2O_5/\sqrt{\Delta P}/m^2/jour$, préférentiellement comprise entre 0,3 et 0,9 tonne de $P_2O_5/\sqrt{\Delta P}/m^2/jour$, en particulier entre 0,4 et 0,7 tonne de $P_2O_5/\sqrt{\Delta P}/m^2/jour$, ladite vitesse de filtration étant calculée suivant l'équation suivante :

$$Vitesse\ de\ filtration = \frac{Q_{P2O5}}{\sqrt{\Delta P}\ \Omega\ T_f}$$

où

$Q_{P2O5}$ correspond la quantité de $P_2O_5$ recueillie dans le filtrat et est exprimée en tonne,
$\Omega$ est la surface du filtre exprimée en $m^2$,
$\Delta P$ est la différence entre la pression en sortie du filtrat et la pression appliquée à la pulpe au moment de ladite première séparation et est exprimée en bar, et
$T_f$ est la durée de ladite première séparation et est exprimée en jour.

La vitesse de filtration indiquée ci-dessus est calculée, d'une manière connue de l'homme de métier, comme décrit notamment dans Albert Rushton, Anthony S. Ward et Richard G. Holdich, Solid-Liquid Filtration and Séparation Technology, p. 35-93, ed. John Wiley & Sons, 2008.

D'une manière surprenante, il est apparu qu'il était possible d'obtenir d'une manière simple un rendement d'extraction en $P_2O_5$ pour les étapes a et b supérieur à 90 % en poids, de préférence supérieur à 93 % en poids, avantageusement supérieur à 95 %, en appliquant des vitesses de filtration rapides et économiques à l'échelle industrielle.

Il a été constaté que le procédé suivant l'invention permet de réaliser ladite étape b) de première séparation à une vitesse de filtration qui est particulièrement avantageuse en ce qu'elle permet, à la fois, de réduire les durées de filtration tout en n'augmentant pas la taille du filtre, ce qui est requis pour une application industrielle.

Ladite période de temps prédéterminée de ladite étape a) de digestion peut être supérieure, inférieure ou égale à celle de l'étape b) de première séparation susdite.

Il est apparu particulièrement avantageux que l'étape de première séparation ne soit plus contraignante pour l'utilisateur étant donné qu'elle est rapide et efficace. Cela a pour conséquence que le procédé suivant la présente invention est suffisamment rentable étant donné qu'il ne nécessite pas de lavage répété et conséquent du moyen de séparation.

En pratique, que ce soit selon un processus en continu ou discontinu, ces avantages fournis par le procédé diminuent nettement la surface de filtration nécessaire. Ainsi, l'étape de première séparation est plus simple et plus efficace ce qui permet en finalité de fournir un procédé plus rentable que les procédés connus de l'état de la technique.

Comme expliqué, le monohydrogénophosphate de calcium obtenu selon le procédé de la présente invention peut être utilisé dans le domaine de l'agriculture, de l'alimentaire ou encore dans une composition destinée à l'agriculture ou à l'alimentaire. Le domaine de l'agriculture inclut notamment les fertilisants, comme les engrais. Il peut également être destiné à la production d'acide phosphorique.

Avantageusement, les étapes a) et b) susdites sont réalisées en une durée prédéterminée inférieure à 2 heures, de préférence une durée comprise entre 30 et 100 minutes, de préférence entre 30 et 70 minutes, plus préférentiellement entre 40 et 65 minutes.

Plus avantageusement encore, ladite période de temps prédéterminée de ladite étape a) est avantageusement comprise entre 75 et 100 minutes, de préférence entre 80 et 95 minutes, ou entre 20 et 45 minutes, en particulier entre 24 et 40 minutes, préférentiellement entre 30 et 35 minutes.

Selon un mode préféré, ladite source de phosphate et ledit acide sont introduits dans un premier réacteur comprenant ledit milieu aqueux simultanément ou successivement, afin de réaliser ladite étape a) de digestion et ladite pulpe comprenant ladite phase aqueuse contenant du phosphate de calcium en solution et ladite phase solide contenant des impuretés est transférée du premier réacteur à un moyen de séparation pour mettre en œuvre ladite première séparation reprise à l'étape b) de première séparation susdite.

Plus préférentiellement, ledit moyen de séparation est situé entre ledit premier réacteur et un deuxième réacteur.

Encore plus préférentiellement, ledit moyen de séparation est présent dans un deuxième réacteur dans lequel est introduite ladite pulpe comprenant une phase aqueuse contenant du phosphate de calcium en solution et une phase solide contenant des impuretés, pour mettre en œuvre ladite première séparation reprise à l'étape b) susdite.

De plus, ledit moyen de séparation peut préférentiellement être un filtre choisi dans le groupe constitué d'un filtre rotatif, de préférence à cellules basculantes, filtre-presse, filtre à bande, filtre tambour.

Selon un mode préféré, ledit acide est choisi dans le groupe constitué de l'acide chlorhydrique (HCl), de l'acide nitrique, de l'acide sulfurique, de l'acide phosphorique et de leurs mélanges.

De manière avantageuse, ledit acide est une solution aqueuse d'acide, de préférence d'acide chlorhydrique, présentant une concentration en acide inférieure ou égale à 15 % en poids.

Plus préférentiellement encore, les étapes a) et b) sont effectuées à une température comprise entre 50°C et 70°C, de préférence égale à 60°C.

De préférence, ladite source de phosphate est choisie dans le groupe constitué d'une roche de phosphate, d'un minerai de phosphate, de sources de phosphate secondaires telles que des cendres (par exemple issues de boues de station d'épuration ou d'os ou de lisiers de porcs) ou de leurs mélanges.

Avantageusement, l'étape de neutralisation est réalisée au moyen d'un agent de neutralisation choisi dans le groupe constitué des composés à base de calcium tels que de l'oxyde ou de l'hydroxyde de calcium, du carbonate de calcium et des sels de calcium hydrosolubles.

D'autres formes de réalisation du procédé suivant l'invention sont indiquées dans les revendications annexées.

La présente invention se rapporte aussi à une utilisation du monohydrogénophosphate de calcium obtenu selon la présente invention pour produire de l'acide phosphorique.

Une telle production d'acide phosphorique peut impliquer une attaque du monohydrogénophosphate de calcium obtenu avec de l'acide sulfurique.

De préférence, le monohydrogénophosphate de calcium obtenu selon le procédé suivant la présente invention est utilisé dans l'industrie alimentaire ou dans le domaine agricole ou horticole.

D'autres formes de réalisation de l'utilisation suivant l'invention sont indiquées dans les revendications annexées.

D'autres caractéristiques, détails et avantages du procédé et de l'utilisation suivant l'invention ressortiront de la description donnée ci-après, à titre non limitatif.

Dans le cadre de la présente invention, l'expression « une digestion est réalisée durant une période de temps prédéterminée » doit être comprise comme signifiant que la digestion se termine au moment où l'étape de première séparation est initiée, ce qui correspond au moment où la pulpe est introduite dans un moyen de séparation, tel un filtre.

Dans le cadre de la présente invention, l'expression « première séparation réalisé durant une période de temps prédéterminée » doit être comprise comme signifiant que la durée liée à cette première séparation est déterminée à partir du moment où la pulpe à filtrer est introduite dans un moyen de séparation, tel un filtre.

Selon un exemple pratique, un minerai de phosphate et une solution aqueuse d'acide chlorhydrique sont introduits simultanément ou successivement dans un milieu aqueux contenu dans un premier réacteur.

Après digestion durant une période de temps prédéterminée, une pulpe est obtenue dans le premier réacteur et est introduite dans un moyen de séparation en vue de réaliser l'étape b) de première séparation durant une période de temps prédéterminée qui peut être inférieure à celle correspondant à l'étape a) de digestion.

Ce moyen de séparation peut être présent dans le premier réacteur ou dans un second réacteur.

Lorsque le moyen de séparation est présent dans le premier réacteur, celui-ci peut être en communication fluidique avec ce réacteur.

Ainsi, la durée prédéterminée de digestion se termine à partir du moment où la pulpe est introduite dans le moyen de séparation.

Le moyen de séparation peut aussi être présent dans un deuxième réacteur éventuellement en communication fluidique avec le premier réacteur.

Il est également possible de faire appel à un premier réacteur, à un deuxième réacteur et à un moyen de séparation qui peut être disposé entre lesdits premier et deuxième réacteurs de sorte à être en communication fluidique avec ces derniers.

Dans le cadre de la présente invention, le procédé peut être réalisé de manière continue ou discontinue.

L'étape de neutralisation de ladite phase aqueuse comprenant du phosphate de calcium et des ions chlorure en solution, lorsque l'attaque est effectuée à l'acide chlorhydrique, est réalisée à un pH suffisant pour précipiter le phosphate de calcium sous forme dudit monohydrogénophosphate de calcium.

Une deuxième séparation est prévue entre ledit milieu aqueux comprenant les ions chlorures et le monohydrogénophosphate de calcium de façon à fournir le monohydrogénophosphate de calcium obtenu par le procédé suivant la présente invention.

Les étapes de neutralisation et de deuxième séparation sont connues de l'homme de l'art, notamment du document WO 2015 082 468, qui est incorporé par référence dans la présente demande de brevet.

## Exemple 1

On part d'un minerai de phosphate présentant les caractéristiques du tableau 1 suivant :

| Quantité de phosphate | | 1000,0 g |
|---|---|---|
| Humidité | 1,93 % | 19,3 g |
| CaO | 48,90 % | 489,0 g |
| $P_2O_5$ | 31,00 % | 310,0 g |

Une quantité de 120, 8 gd'eau déminéralisée est introduite dans un berlin et ensuite une quantité de 75 g de phosphate du tableau 1 est ajoutée à l'eau déminéralisée, sous agitation, pour former un mélange. Le berlin est ensuite couvert d'un verre de montre et le mélange est amené à une température de 60°C.

A une solution aqueuse d'acide chlorhydrique, qui présente une concentration en HCl de 37 %, on mélange 120,8 g d'eau déminéralisée, de manière à obtenir 357,7 g d'une solution aqueuse d'HCl à 12 %. Cette dernière est ensuite ajoutée au mélange chaud de phosphate et d'eau déminéralisée.

La durée de digestion est mesurée à compter du moment où la solution aqueuse d'acide dilué est ajoutée au mélange chaud contenant le phosphate et l'eau déminéralisée.

La solution obtenue après digestion est filtrée, à une température de filtration de 60°C, au moyen d'un filtre en fibre de polyester ayant un diamètre de 90 mm et une épaisseur de 0,17 mm disposé sur un équipement de type Buchner préalablement mis sous vide.

La pression de filtration utilisée est 0,4 bar, ce qui représente une différence de pression motrice de 0,6 bar par rapport à la pression atmosphérique de 1 bar.

La durée de filtration correspond au temps nécessaire pour obtenir un gâteau humide à partir de la pulpe formée lors des étapes précédentes. Après la filtration, le gâteau est soumis à une étape de séchage au cours de laquelle, l'air ambiant est aspiré au travers du gâteau, l'étape de séchage durant 5 minutes. Selon ce premier exemple de réalisation, la durée de filtration est de 5 minutes.

Le poids du gâteau humide obtenu est ensuite mesuré ainsi que le poids du filtrat. Les filtrats et le gâteau sont ensuite soumis à l'analyse.

Le gâteau humide est ensuite séché à une température de 60°C et son poids, après séchage, est également mesuré.

Dans cet exemple, le temps de digestion est de 30 minutes et la durée de filtration est de 5 minutes, comme illustré au tableau 2 ci-dessous.

**Tableau 2**

| Exemple 1 | |
|---|---|
| Quantité de phosphate de départ | 75 grammes |

(suite)

| Exemple 1 | |
|---|---|
| Quantité de la solution aqueuse d'HCl 12% | 357,7 grammes |
| Température de digestion du minerai | 60°C |
| Temps de digestion | 30 minutes |
| Température de filtration | 60°C |
| Temps de filtration | 5 minutes |
| Vitesse de filtration | 1,3 tonne de $P_2O_5$/m$^2$/$\sqrt{\Delta P}$/jour |

Le rendement en $P_2O_5$ dans le produit final obtenu en fin de procédé après les étapes a et b est égal à 94,03 %. Le rendement est calculé sur base de la quantité de $P_2O_5$ présente dans le minerai de phosphate. Il représente le pourcentage de $P_2O_5$ dans le filtrat après l'étape de première séparation b par rapport à cette quantité.

**Exemple 2**

Cet exemple est réalisé dans les mêmes conditions opératoires que celles décrites à l'exemple 1, à l'exception du fait que le temps de digestion est de 45 minutes et la durée de filtration est de 5,5 minutes, comme illustré au tableau 3 ci-dessous.

**Tableau 3**

| Exemple 2 | |
|---|---|
| Quantité de phosphate de départ | 75 grammes |
| Quantité de la solution aqueuse d'HCl 12% | 357,7 grammes |
| Température de digestion du minerai | 60°C |
| Temps de digestion | 45 minutes |
| Température de filtration | 60°C |
| Temps de filtration | 5,5 minutes |
| Vitesse de filtration | 1,1 tonne de $P_2O_5$/m$^2$/$\sqrt{\Delta P}$/jour |

Le rendement en $P_2O_5$ après les étapes a et b du procédé est de 93,02 %.

**Exemple 3**

Cet exemple est réalisé dans les mêmes conditions opératoires que celles décrites à l'exemple 1, à l'exception du fait que le temps de digestion est de 60 minutes et que la durée de filtration est de 4,75 minutes, comme illustré au tableau 4 ci-dessous.

**Tableau 4**

| Exemple 3 | |
|---|---|
| Quantité de phosphate de départ | 75 grammes |
| Quantité de la solution aqueuse d'HCl 12% | 357,7 grammes |
| Température de digestion du minerai | 60°C |
| Temps de digestion | 60 minutes |
| Température de filtration | 60°C |
| Temps de filtration | 4,75 minutes |
| Vitesse de filtration | 1,3 tonne de $P_2O_5$/m$^2$/$\sqrt{\Delta P}$/jour |

Le rendement en $P_2O_5$ dans le produit après les étapes a et b du procédé est de 93,16 %.

**Exemple 4**

Cet exemple est réalisé dans les mêmes conditions opératoires que celles décrites à l'exemple 1, à l'exception du fait que le temps de digestion est de 90 minutes et la durée de filtration est de 2,33 minutes, comme illustré au tableau 5 ci-dessous.

**Tableau 5**

| Exemple 4 | |
|---|---|
| Quantité de phosphate de départ | 75 grammes |
| Quantité de la solution aqueuse d'HCl 12% | 357,7 grammes |
| Température de digestion du minerai | 60°C |
| Temps de digestion | 90 minutes |
| Température de filtration | 60°C |
| Temps de filtration | 2,33 minutes |
| Vitesse de filtration | 2,7 tonnes de $P_2O_5/m^2/\sqrt{\Delta P}$/jour |

Le rendement en $P_2O_5$ dans le produit obtenu après les étapes a et b du procédé est de 91,96 %.

**Exemple 5**

Cet exemple est réalisé dans les mêmes conditions opératoires que celles décrites à l'exemple 1, à l'exception du fait que le temps de digestion est de 10,5 minutes et la durée de filtration est de 25 minutes, comme illustré au tableau 6 ci-dessous.

**Tableau 6**

| Exemple 5 | |
|---|---|
| Quantité de phosphate de départ | 75 grammes |
| Quantité de la solution aqueuse d'HCl 12% | 357,7 grammes |
| Température de digestion du minerai | 60°C |
| Temps de digestion | 10,5 minutes |
| Température de filtration | 60°C |
| Temps de filtration | 25 minutes |
| Vitesse de filtration | 0,3 tonne de $P_2O_5/m^2/\sqrt{\Delta P}$/jour |

Le rendement en $P_2O_5$ dans le produit obtenu après les étapes a et b du procédé est de 96,33 %.

**Exemple 6**

Cet exemple est réalisé dans les mêmes conditions opératoires que celles décrites à l'exemple 1, à l'exception du fait que le temps de digestion est de 15 minutes et la durée de filtration est de 13 minutes comme illustré au tableau 7.

**Tableau 7**

| Exemple 6 | |
|---|---|
| Quantité de phosphate de départ | 75 grammes |
| Quantité de la solution aqueuse d'HCl 12% | 357,7 grammes |
| Température de digestion du minerai | 60°C |

(suite)

| Exemple 6 | |
|---|---|
| Temps de digestion | 15 minutes |
| Température de filtration | 60°C |
| Temps de filtration | 13 minutes |
| Vitesse de filtration | 0,5 tonne de $P_2O_5/m^2/\sqrt{\Delta P}/jour$ |

Le rendement en $P_2O_5$ dans le produit obtenu après les étapes a et b du procédé est de 96,19 %.

## Exemple 7

Cet exemple est réalisé dans les mêmes conditions opératoires que celles décrites à l'exemple 1, à l'exception du fait que le temps de digestion est de 21,5 minutes et la durée de filtration est de 9 minutes, comme illustré au tableau 8 ci-dessous.

**Tableau 8**

| Exemple 7 | |
|---|---|
| Quantité de phosphate de départ | 75 grammes |
| Quantité de la solution aqueuse d'HCl 12% | 357,7 grammes |
| Température de digestion du minerai | 60°C |
| Temps de digestion | 21,5 minutes |
| Température de filtration | 60°C |
| Temps de filtration | 9 minutes |
| Vitesse de filtration | 0,7 tonne de $P_2O_5/m^2/\sqrt{\Delta P}/jour$ |

Le rendement en $P_2O_5$ dans le produit obtenu après les étapes a et b du procédé est de 96,09 %.

## Revendications

1.  Procédé de préparation de monohydrogénophosphate de calcium comprenant les étapes de:

   a) digestion en milieu aqueux, durant une période de temps prédéterminée, d'une source de phosphate par un acide avec formation d'une pulpe comprenant une phase aqueuse contenant du phosphate de calcium en solution et une phase solide contenant des impuretés,
   b) une première séparation entre ladite phase aqueuse contenant du phosphate de calcium en solution et ladite phase solide contenant des impuretés, durant une période de temps prédéterminée,
   c) une neutralisation de ladite phase aqueuse contenant du phosphate de calcium en solution à un pH suffisant pour obtenir une précipitation dans un milieu aqueux de phosphate de calcium insoluble en tant que monohydrogénophosphate de calcium susdit, et
   d) une deuxième séparation entre ledit milieu aqueux et ledit monohydrogénophosphate de calcium,

   **caractérisé en ce que** ladite première séparation de ladite étape b) est réalisée à une vitesse de filtration comprise entre 0,15 et 3 tonnes de $P_2O_5/\sqrt{\Delta P}/m^2/jour$, préférentiellement comprise entre 0,3 et 0,9 tonne de $P_2O_5/\sqrt{\Delta P}/m^2/jour$, en particulier entre 0,4 et 0,7 tonne de $P_2O_5/\sqrt{\Delta P}/m^2/jour$, ladite vitesse de filtration étant calculée suivant l'équation suivante :

$$Vitesse\ de\ filtration = \frac{Q_{P2O5}}{\sqrt{\Delta P}\ \Omega\ T_f}$$

où

$Q_{P2O5}$ correspond la quantité de $P_2O_5$ recueillie dans le filtrat et est exprimée en tonne,
$\Omega$ est la surface du filtre exprimée en m$^2$,
$\Delta P$ est la différence entre la pression en sortie du filtrat et la pression appliquée à la pulpe au moment de ladite première séparation et est exprimée en bar, et
$T_f$ est la durée de ladite première séparation et est exprimée en jour.

**2.** Procédé selon la revendication 1, dans lequel les étapes a) et b) susdites sont réalisées en une durée prédéterminée inférieure à 2 heures, de préférence une durée comprise entre 30 et 100 minutes, en particulier entre 30 et 70 minutes, plus préférentiellement entre 40 et 65 minutes.

**3.** Procédé selon l'une quelconque des revendications précédentes, dans lequel ladite source de phosphate et ledit acide sont introduits dans un premier réacteur comprenant ledit milieu aqueux simultanément ou successivement, afin de réaliser ladite étape a) de digestion et dans lequel ladite pulpe comprenant ladite phase aqueuse contenant du phosphate de calcium en solution et ladite phase solide contenant des impuretés est transférée du premier réacteur à un moyen de séparation pour mettre en œuvre ladite première séparation reprise à l'étape b) susdite.

**4.** Procédé selon la revendication 3, dans lequel ledit moyen de séparation est situé entre ledit premier réacteur et un deuxième réacteur.

**5.** Procédé selon la revendication 3, dans lequel ledit moyen de séparation est présent dans un deuxième réacteur dans lequel est introduite ladite pulpe comprenant une phase aqueuse contenant du phosphate de calcium en solution et une phase solide contenant des impuretés, pour mettre en œuvre ladite première séparation reprise à l'étape b) susdite.

**6.** Procédé selon l'une quelconque des revendications 3 à 5, dans lequel ledit moyen de séparation est un filtre choisi dans le groupe constitué d'un filtre rotatif, de préférence à cellules basculantes, filtre presse, filtre à bande, filtre tambour.

**7.** Procédé selon l'une quelconque des revendications précédentes, dans lequel ledit acide est choisi dans le groupe constitué de l'acide chlorhydrique (HCl), de l'acide nitrique, de l'acide sulfurique, de l'acide phosphorique et de leurs mélanges.

**8.** Procédé selon la revendication 7, dans lequel ledit acide est une solution aqueuse d'acide présentant une concentration en acide inférieure ou égale à 15% en poids, de préférence dans le premier réacteur.

**9.** Procédé selon l'une quelconque des revendications précédentes, dans lequel les étapes a) et b) sont effectuées à une température comprise entre 50°C et 70°C, de préférence égale à 60°C.

**10.** Procédé selon l'une quelconque des revendications précédentes, dans lequel ladite source de phosphate est choisie dans le groupe constitué d'une roche de phosphate, d'un minerai de phosphate, de sources de phosphate secondaires telles que des cendres, par exemple issues de boues de station d'épuration ou d'os ou de lisiers de porcs, ou de leurs mélanges.

**11.** Procédé selon l'une quelconque des revendications précédentes, dans lequel l'étape de neutralisation est réalisée au moyen d'un agent de neutralisation choisi dans le groupe constitué des composés à base de calcium tels que de l'oxyde, de l'hydroxyde, du carbonate de calcium et des sels de calcium hydrosolubles.

**Patentansprüche**

**1.** Verfahren zur Herstellung von Calciummonohydrogenphosphat, umfassend die Schritte:

a) Aufschließen einer Phosphatquelle in einem wässrigen Medium während einer vorbestimmten Zeitspanne durch eine Säure unter Bildung einer Pulpe, die eine wässrige, Calciumphosphat in Lösung enthaltende Phase und eine feste, Verunreinigungen enthaltende Phase umfasst,
b) eine erste Trennung zwischen der wässrigen, Calciumphosphat in Lösung enthaltenden Phase und der festen, Verunreinigungen enthaltenden Phase während einer vorbestimmten Zeitspanne,

c) eine Neutralisierung der wässrigen, Calciumphosphat in Lösung enthaltenden Phase auf einen pH-Wert, der ausreicht, um in einem wässrigen Medium eine Ausfällung von unlöslichem Calciumphosphat als oben genanntes Calciummonohydrogenphosphat zu erhalten, und

d) eine zweite Trennung zwischen dem wässrigen Medium und dem Calciummonohydrogenphosphat,

**dadurch gekennzeichnet, dass** die erste Trennung des Schritts b) bei einer Filtrationsrate zwischen 0,15 und 3 Tonnen $P_2O_5/\sqrt{\Delta P}/m^2$/Tag, vorzugsweise zwischen 0,3 und 0,9 Tonnen $P_2O_5/\sqrt{\Delta P}/m^2$/Tag, insbesondere zwischen 0,4 und 0,7 Tonnen P2O5/$\sqrt{\Delta P}$/m2/Tag durchgeführt wird, wobei die Filtrationsrate der folgenden Gleichung folgend berechnet wird:

$$\text{Filtrationsrate} = \frac{Q_{P2O5}}{\sqrt{\Delta P}\ \Omega\ T_f}$$

wobei

$Q_{P2O5}$ der im Filtrat gesammelten Menge an $P_2O_5$ entspricht und in Tonnen ausgedrückt wird,

$\Omega$ die in m² ausgedrückte Oberfläche des Filters darstellt,

$\Delta P$ die Differenz zwischen dem Filtratausgangsdruck und dem Druck, der zum Zeitpunkt der ersten Trennung auf die Pulpe ausgeübt wird, darstellt und in bar ausgedrückt wird, und

$T_f$ die Dauer der ersten Trennung darstellt und in Tagen ausgedrückt wird.

2. Verfahren nach Anspruch 1, wobei die oben genannten Schritte a) und b) in einer vorgegebenen Zeitspanne von weniger als 2 Stunden, bevorzugt einer Zeitspanne von zwischen 30 und 100 Minuten, insbesondere zwischen 30 und 70 Minuten, stärker bevorzugt zwischen 40 und 65 Minuten, durchgeführt werden.

3. Verfahren nach einem der vorstehenden Ansprüche, wobei die Phosphatquelle und die Säure gleichzeitig oder nacheinander in einen ersten Reaktor, der das wässrige Medium umfasst, eingeführt werden, um den Schritt a) des Aufschließens durchzuführen, und wobei die Pulpe, die die wässrige, Calciumphosphat in Lösung enthaltende Phase und die feste, Verunreinigungen enthaltende Phase umfasst, aus dem ersten Reaktor zu einem Trennungsmittel überführt wird, um die erste im oben genannten Schritt b) wieder aufgenommene Trennung zu verwirklichen.

4. Verfahren nach Anspruch 3, wobei sich das Trennungsmittel zwischen dem ersten Reaktor und einem zweiten Reaktor befindet.

5. Verfahren nach Anspruch 3, wobei das Trennungsmittel in einem zweiten Reaktor vorhanden ist, in den die Pulpe, die eine wässrige, Calciumphosphat in Lösung enthaltende Phase und eine feste, Verunreinigungen enthaltende Phase umfasst, eingeführt wird, um die erste Trennung im oben genannten Schritt b) zu verwirklichen.

6. Verfahren nach einem der Ansprüche 3 bis 5, wobei es sich bei dem Trennungsmittel um einen Filter handelt, ausgewählt aus der Gruppe bestehend aus einem Rotationsfilter, vorzugsweise einem Kippzellenfilter, Pressfilter, Bandfilter, Trommelfilter.

7. Verfahren nach einem der vorstehenden Ansprüche, wobei die Säure ausgewählt ist aus der Gruppe bestehend aus Salzsäure (HCl), Salpetersäure, Schwefelsäure, Phosphorsäure und Mischungen davon.

8. Verfahren nach Anspruch 7, wobei die Säure eine wässrige Säurelösung ist, die vorzugsweise im ersten Reaktor eine Säurekonzentration von weniger als oder gleich 15 Gewichts-% aufweist.

9. Verfahren nach einem der vorstehenden Ansprüche, wobei die Schritte a) und b) bei einer Temperatur von zwischen 50 °C und 70 °C, vorzugsweise gleich 60 °C, ausgeführt werden.

10. Verfahren nach einem der vorstehenden Ansprüche, wobei die Phosphatquelle ausgewählt wird aus der Gruppe bestehend aus einem Phosphatgestein, einem Phosphaterz, sekundären Phosphatquellen wie Asche, beispielsweise aus Kläranlagenschlamm oder Schweineknochen oder -gülle, oder Mischungen davon.

11. Verfahren nach einem der vorstehenden Ansprüche, wobei der Schritt der Neutralisierung mittels eines Neutralisierungsmittels durchgeführt wird, ausgewählt aus der Gruppe bestehend aus Verbindungen auf Basis von Calcium, wie Oxid, Hydroxid, Calciumcarbonat und wasserlöslichen Calciumsalzen.

**Claims**

1. A method for producing calcium monohydrogen phosphate comprising the following steps:

   a) a digestion in aqueous medium, for a predetermined period of time, of a source of phosphate by an acid, with formation of a pulp comprising an aqueous phase containing calcium phosphate in solution and a solid phase containing impurities,
   b) a first separation between said aqueous phase containing calcium phosphate in solution and said solid phase containing impurities, for a predetermined period of time,
   c) a neutralization of said aqueous phase containing calcium phosphate in solution at a pH sufficient to obtain precipitation in an aqueous medium of insoluble calcium phosphate as the above-mentioned calcium monohydrogen phosphate, and
   d) a second separation between said aqueous medium and said calcium monohydrogen phosphate,

   **characterized in that** said first separation of said step b) is carried out at a filtration rate comprised between 0.15 and 3 tonnes of $P_2O_5/\sqrt{\Delta P}/m^2/day$, preferably comprised between 0.3 and 0.9 tonnes of $P_2O_5/\sqrt{\Delta P}/m^2/day$, in particular between 0.4 and 0.7 tonnes of $P_2O_5/\sqrt{\Delta P}/m^2/day$, said filtration rate being calculated according to the following equation:

   $$Filtration\ rate = \frac{Q_{P2O5}}{\sqrt{\Delta P}\ \Omega\ T_f}$$

   wherein

   $Q_{P2O5}$ corresponds to the amount of $P_2O_5$ collected in the filtrate and is expressed in tonnes,
   $\Omega$ is the surface area of the filter expressed in $m^2$,
   $\Delta P$ is the difference between the filtrate outlet pressure and the pressure applied to the pulp at the time of said first separation and is expressed in bar, and
   $T_f$ is the duration of said first separation and is expressed in days.

2. The method according to claim 1, wherein the above-mentioned steps a) and b) are carried out in a predetermined time of less than 2 hours, preferably a time between 30 and 100 minutes, in particular between 30 and 70 minutes, more preferably between 40 and 65 minutes.

3. The method according to any one of the preceding claims, wherein said phosphate source and said acid are introduced into a first reactor comprising said aqueous medium simultaneously or successively, in order to carry out said digestion step a) and wherein said pulp comprising said aqueous phase containing calcium phosphate in solution and said solid phase containing impurities is transferred from the first reactor to a separation means for carrying out said first separation resumed in the above-mentioned step b).

4. The method according to claim 3, wherein said separation means is located between said first reactor and a second reactor.

5. The method according to claim 3, wherein said separation means is present in a second reactor wherein said pulp comprising an aqueous phase containing calcium phosphate in solution and a solid phase containing impurities is introduced, to carry out said first separation resumed in the above-mentioned step b).

6. The method according to any of claims 3 to 5, wherein said separation means is a filter selected from the group consisting of a rotary filter, preferably with tilting cells, filter press, band filter, drum filter.

7. The method according to any one of the preceding claims, wherein said acid is selected from the group consisting of hydrochloric acid (HCI), nitric acid, sulfuric acid, phosphoric acid and mixtures thereof.

8. The method according to claim 7, wherein said acid is an aqueous acid solution having an acid concentration of less than or equal to 15% by weight, preferably in the first reactor.

9. The method according to any one of the preceding claims, wherein steps a) and b) are carried out at a temperature between 50°C and 70°C, preferably equal to 60°C.

10. The method according to any one of the preceding claims, wherein said phosphate source is selected from the group consisting of a phosphate rock, a phosphate ore, secondary phosphate sources such as ashes, e.g. from sewage plant sludge or pig bones or manures, or mixtures thereof.

11. The method according to any one of the preceding claims, wherein the neutralization step is carried out by means of a neutralizing agent selected from the group consisting of calcium-based compounds such as calcium oxide, hydroxide, calcium carbonate and water-soluble calcium salts.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3304157 A
- GB 1051521 A
- WO 2004002888 A

- WO 2005066070 A
- WO 2015082468 A

**Littérature non-brevet citée dans la description**

- **ALBERT RUSHTON ; ANTHONY S. WARD ; RICHARD G. HOLDICH.** Solid-Liquid Filtration and Séparation Technology. John Wiley & Sons, 2008, 35-93